# EUROPÄISCHE PATENTSCHRIFT

(11) **EP 2 215 456 B1**
(45) Veröffentlichungstag und Bekanntmachung des Hinweises auf die Patenterteilung: **14.10.2015**
(21) Anmeldenummer: 08854966.2
(22) Anmeldetag: 28.11.2008
(51) Int. Cl.: G01N 21/27, G01N 21/31

(54) **SPEKTROMETERMESSKOPF ZUR ANALYSE VON KENNGRÖSSEN FLÜSSIGER, PASTÖSER ODER FESTER SUBSTANZEN**
SPECTROMETER MEASURING HEAD FOR ANALYSING CHARACTERISTIC VARIABLES OF LIQUID, PASTY OR SOLID SUBSTANCES
TÊTE DE MESURE DE SPECTROMÈTRE POUR L'ANALYSE DE GRANDEURS CARACTÉRISTIQUES DE SUBSTANCES LIQUIDES, PÂTEUSES OU SOLIDES

(30) Priorität: 30.11.2007 DE 102007058563
(43) Veröffentlichungstag der Anmeldung: 11.08.2010
(73) Patentinhaber: Sentronic GmbH Gesellschaft für optische Messsysteme, 01217 Dresden (DE)
(72) Erfinder: KIRSCHNER, Uwe, 01097 Dresden (DE); LAU, Matthias, 01307 Dresden (DE)
(74) Vertreter: Kailuweit & Uhlemann Patentanwälte Partnerschaft mbB
(86) Internationale Anmeldenummer: PCT/DE2008/002046
(87) Internationale Veröffentlichungsnummer: WO 2009/068022

(56) Entgegenhaltungen:
- EP-A2- 1 111 373
- WO-A-02/055998
- DE-A1- 1 922 423
- DE-A1- 3 424 230
- DE-A1- 3 613 233
- DE-B1- 2 358 966
- US-A- 4 231 663
- US-A- 4 778 233
- US-A1- 2003 169 420
- US-A1- 2004 186 363
- US-B1- 7 019 822

## Beschreibung

Die Erfindung betrifft Spektrometermessköpfe zur Analyse von Kenngrößen flüssiger, pastöser oder fester Substanzen für optische Spektrometersysteme.

Eine Spektrometersonde mit einer internen Lichtquelle und Kalibrierung ist aus der Druckschrift DE 10 2004 021 448 A 1 (Spektrometrischer Reflexionsmesskopf und Verfahren zu dessen interner Rekalibrierung) bekannt. In einem Gehäuse mit einem Fenster sind dazu eine Beleuchtungsquelle, eine Optikbaugruppe und mindestens zwei Standards zur internen Rekalibrierung vorhanden. Diese Standards können wahlweise in den Strahlengang des Messkopfes geschwenkt werden, so dass das gesamte von der Beleuchtungsquelle ausgehende Messlicht zur Rekalibrierung verwendet wird. Die Rekalibrierung erfolgt dabei automatisch nach bestimmten Zeitabständen.

In Ergänzung ist durch die Druckschrift DE 10 2004 048 102 A 1 (Spektrometrischer Messkopf und Verfahren zu dessen Rekalibrierung) ein spektrometrischer Messkopf mit einem internen Prozessor und einer damit verbundenen Schnittstelle bekannt.

Die Rekalibrierung erfolgt bei diesen Messköpfen automatisch durch Schwenken der wenigstens zwei Standards. Dabei muss sichergestellt sein, dass sich kein Standard für die Messung einer Substanz, der eine Standard oder der andere Standard im Strahlengang des Messkopfes befindet. Für die Positionierung der Standards sind dazu ein Antrieb mit drei festen Fixierstellungen oder zwei Antriebe notwendig. Bei Einsatz eines Antriebs sind dazu besondere Maßnahmen zur sicheren und reproduzierbaren Positionierung der Standards außerhalb oder im Strahlengang notwendig. Außerdem muss der Antrieb einen großen Hub aufweisen. Zwei Antriebe erhöhen den Aufwand und die Größe des Messkopfes wesentlich.

Die Druckschrift US 7,019,822 B1 lehrt ein System, bei dem Licht über einen beweglichen Spiegel wahlweise auf ein Objekt oder auf eine Referenzoberfläche gelenkt werden kann.

Die Druckschrift DE 3613233 A1 offenbart eine Einrichtung zum Verstellen eines Lichtstrahls in einer Auftreffebene, bei dem ein Spiegel über ein Kipp-/Drehgelenk an einen elektromagnetischen Antrieb gekoppelt ist.

Der im Patentanspruch 1 angegebenen Erfindung liegt die Aufgabe zugrunde, einen langzeitstabilen, wartungsarmen und einfach aufgebauten Spektrometermesskopf für ein optisches Spektrometersystem zu schaffen.

Diese Aufgabe wird mit den im Patentanspruch 1 aufgeführten Merkmalen gelöst.

Die Spektrometermessköpfe zur Analyse von Kenngrößen flüssiger, pastöser oder fester Substanzen für optische Spektrometersysteme zeichnen sich insbesondere durch deren langzeitstabilen, wartungsarmen und einfachen Realisierung aus.

Dazu sind in einem Gehäuse ein drehbar gelagerter Spiegel und wenigstens eine Quelle für optische Strahlung oder eine optische Strahlung auskoppelnde Einrichtung so angeordnet, dass die optische Strahlung durch Klappen des drehbar gelagerten Spiegels entweder auf einen Referenzkörper im Gehäuse oder über ein Fenster des Gehäuses auf die zu analysierende Substanz fallt. Dazu ist der Spiegel mechanisch an einen translatorisch wirkenden Antrieb im Gehäuse gekoppelt. Darüber hinaus ist im Gehäuse wenigstens ein Lichtleiter so angeordnet, dass wenigstens ein Teil der von der Oberfläche entweder des Referenzkörpers oder der zu analysierenden Substanz reflektierten oder transmittierten optischen Strahlung in den Lichtleiter einkoppelt.

Bei dem Spektrometermesskopf ist die Quelle für optische Strahlung als Leuchtmittel integriert. Dadurch ist es möglich, die Substanz oder den Referenzkörper verlustarm zu beleuchten. Die Quelle für optische Strahlung kann dadurch mit einer geringeren Leistung als bei über Lichtleiter gekoppelten Lichtquellen betrieben werden. Dadurch steigt die Lebensdauer der Quelle für optische Strahlung und der Wartungsaufwand verringert sich wesentlich. Die häufig zur Beleuchtung der Substanz eingesetzten Lichtleiterbündel können entfallen.

Natürlich kann auch eine optische Strahlung auskoppelnde Einrichtung anstelle der Quelle für optische Strahlung angeordnet sein. Das ist wenigstens ein Lichtleiter, dessen Ende auch eine optische Strahlung beeinflussende Vorrichtung aufweisen kann.

Damit ist ein ökonomischer Einsatz der Spektrometermessköpfe gegeben.

Ein weiterer wesentlicher Vorteil besteht in der Anordnung des Spiegels im der Spektrometermesskopf. Der Spiegel wird nur zwischen zwei Endpositionen bewegt, die vorteilhafterweise durch Anschlagstücke bestimmt werden können. Damit kann der Spiegel einfach an den Antrieb gekoppelt werden. Besondere Maßnahmen zur Positionierung des Spiegels sind nicht notwendig. Der Spiegel wird vorteilhafterweise dabei zwischen den beiden Endpositionen geklappt.

Der Spiegel selbst ist ein ebener plattenförmiger Körper mit einer Spiegelfläche, die der Reflexion der optischen Strahlung sowohl von der Quelle als auch von der Oberfläche entweder des Referenzkörpers oder der zu analysierenden Substanz dient. Der Spiegel ist mittels eines Drehgelenks klappbar angeordnet. Dadurch ergibt sich eine sehr einfache und ökonomische Realisierung des Spektrometermesskopfes.

Für den wenigstens einen Lichtleiter wird vorzugsweise ein Lichtwellenleiter insbesondere ein Mehrmoden-Lichtwellenleiter verwendet, um ein ausreichendes Messsignal zum Spektrometer zu senden.

Weiterhin ist der Spektrometermesskopf weniger vibrationsanfällig. Darüber hinaus eignet sich dieser bei Anwendungen, bei denen stabile Positionen auch bei bewegter Anwendung erforderlich sind.

Gleichzeitig werden an die Lagerung des Spiegels keine besonderen Anforderungen gestellt, so dass eng tolerierte Bestandteile für die Realisierung des Lagers nicht erforderlich sind.

Die Endpositionen, die Lage des Referenzkörpers und die des Fensters sind dabei vorteilhafterweise so gewählt, dass die Lichtstrahlen der Quelle für optische Strahlung entweder direkt oder über den Spiegel auf die Substanz oder über den Spiegel oder direkt auf den Referenzkörper fallen. Dementsprechend fallen die jeweilig reflektierten Lichtstrahlen vom jeweiligen Körper direkt oder über den Spiegel zur Einkopplung auf die Stirnseite des Lichtleiters. Eng tolerierte Anordnungen dieser Bestandteile sind nicht notwendig, so dass eine einfache Realisierung des Spektrometermesskopfes gegeben ist.

Ein weiterer Vorteil besteht darin, dass nur eine geringe Masse mit einem geringen Hub bewegt werden muss. Der Spiegel kann nah an der Quelle für optische Strahlung angeordnet und als leichtes Bauteil realisiert werden. Dadurch kann der Spektrometermesskopf auch miniaturisiert werden und in den gleichen für faseroptische Messköpfe üblichen Abmessungen gefertigt werden.

Ein weiterer Vorteil besteht darin, dass der Spektrometermesskopf als kleine Baugruppe realisierbar ist, wodurch sich diese leicht in die vielfältigsten Anlagen integrieren oder an spezielle Analyseaufgaben anpassen lässt. Auch eine manuelle Handhabung des Spektrometermesskopfes zum Beispiel in mobilen Messgeräten ist durch eine kleine Realisierung leicht möglich.

Der Spektrometermesskopf für ein optisches Spektrometersystem ist bei Integration in ein solches ein Bestandteil des Spektrometersystems. Die von der Substanz oder dem Referenzkörper reflektierte optische Strahlung wird in den Lichtleiter eingekoppelt und weitergeleitet. Im Spektrometer wird diese Strahlung spektral zerlegt und die Reflexion oder Absorption der Substanz oder des Referenzkörpers ausgewertet. Die reflektierte Strahlung basiert dabei auf der Reflexion, Remission oder Absorption durch die Substanz oder den Referenzkörper. Zum Betrieb sind weiterhin nur die elektrischen Zuleitungen für die Lichtquelle und den Antrieb erforderlich. Das ist bei einer integrierten Steuerung die Stromversorgung und eine Steuerverbindung.

Natürlich können auch mehrere Spektrometermessköpfe ein Bestandteil eines Spektrometersystems sein, wobei die optische Strahlung vor deren Zerlegung über einen bekannten Multiplexer von den Spektrometermessköpfen auf den Spektrometereingang gelangt. Dabei können vorteilhafterweise auch einfache Kanalumschalter eingesetzt werden, die beispielsweise piezomechanisch verschiedene Lichtleiter schalten.

Durch die einfache Realisierung der verwendeten Mechanik für die Bewegung des Spiegels kann der Spektrometermesskopf auch Temperaturen von bis zu 150-200°C auf der Messseite ausgesetzt werden. Durch die Lage des Referenzkörpers im Spektrometermesskopf wird fast die gesamte Strecke der Messung von Temperatur- und Langzeiteinflüssen befreit, so dass eine besonders hohe Langzeitstabilität und Genauigkeit erreicht wird.

Vorteilhafterweise kann der Spektrometermesskopf auch in explosionsgefährdeten Bereichen eingesetzt werden, wenn dazu die entsprechenden Maßnahmen eingehalten werden.

6 Vorteilhafte Ausgestaltungen der Erfindung sind in den Patentansprüchen 2 bis 6 angegeben.

Der Spiegel ist ein erster Arm einer Wippe. Weiterhin ist an den zweiten Arm der Wippe der Antrieb gekoppelt. Eine derartige Anordnung stellt eine einfache Realisierung eines schwenkbaren Spiegels dar.

Nach der Weiterbildung des Patentanspruchs 2 ist das Drehgelenk des Spiegels an den Antrieb gekoppelt. Weiterhin sind im Gehäuse ein Gleitstück oder Rollkörper für den Spiegel an dessen Rückseite und wenigstens ein an den Spiegel angreifendes Federelement so angeordnet, dass die Federkraft in Richtung des Gleitstücks oder Rollkörpers wirkt. Darüber hinaus ist das Drehgelenk beabstandet zum Gleitstück geradgeführt bewegbar, so dass der Spiegel bei einer Bewegung gegenüber der Führung geschwenkt wird.

Ein Grundkörper wenigstens entweder für das Drehgelenk oder mit dem Drehgelenk des drehbar gelagerten Spiegels ist nach der Weiterbildung des Patentanspruchs 3 mit einem Heizelement für das Fenster versehen. Bei einigen Anwendungen wird damit ein Anbacken von Substanzen am Fenster vermieden.

Nach der Weiterbildung des Patentanspruchs 4 sind in dem Gehäuse der drehbar gelagerte Spiegel und zwei Quellen für optische Strahlung so angeordnet, dass die optische Strahlung wenigstens einer der Quellen der optischen Strahlung jeweils entweder auf den Referenzkörper im Gehäuse oder über das Fenster des Gehäuses auf die Substanz fällt. Weiterhin ist im Gehäuse die Stirnseite des Lichtleiters so angeordnet, dass wenigstens ein Teil der von der Oberfläche entweder des Referenzkörpers oder der Substanz reflektierten oder transmittierten optischen Strahlung in den Lichtleiter eingekoppelt wird. Die zweite Quelle für optische Strahlung ist beispielsweise als redundante Quelle für optische Strahlung symmetrisch im Spektrometermesskopf angeordnet. Der Lichtleiter bildet dabei vorteilhafterweise die optische Achse für wenigstens einen Teil der vom Referenzkörper oder von der zu analysierenden Substanz resultierenden optischen Strahlung.

Bei Verzicht auf die Redundanz nach Ausfall der ersten Quelle für optische Strahlung ist es auch möglich, den wartungsfreien Betrieb der Spektrometersonde auf das Doppelte der Lebensdauer einer Quelle für optische Strahlung zu verlängern.

Ein Grundkörper, die Wippe, das Drehgelenk der Wippe, der Referenzkörper, die Quelle für optische Strahlung und der Antrieb sind nach der Weiterbildung des Patentanspruchs 5 Bestandteile einer Baugruppe. Dadurch ist eine dauerhaft feste Fixierung der Komponenten zueinander und eine leichte Montage in das Gehäuse gegeben. Das Gehäuse ist beispielsweise eine einseitig abgeschlossene Hülse mit dem Fenster.

Das Fenster ist nach der Weiterbildung des Patentanspruchs 6 ein Bestandteil entweder der Stirnwand oder einer Seitenwand des Gehäuses. Die Einsatzmöglichkeiten der Spektrometersonde erhöhen sich wesentlich.

So ermöglicht zum Beispiel eine Einstechsonde mit einem Spektrometermesskopf mit einem Seitenfenster die Messung pulverförmiger Substanzen, ohne diese gleichzeitig zu komprimieren. Für Anwendungen in der Rohstoffkontrolle oder Endproduktkontrolle können dadurch Ergebnisse erzielt werden, die weniger stark von der verwendeten Andruckkraft beim Analysieren abhängen.

Ein günstiger Antrieb ist nach der Weiterbildung des Patentanspruchs 7 ein translatorisch wirkender elektromagnetischer Antrieb mit einer Rückholfeder für das bewegte Teil oder ein translatorisch wirkender piezoelektrischer Antrieb.

Durch den elektromagnetischen Antrieb ist eine translatorische Bewegung einfach zu realisieren. Vorteilhafterweise erfolgt die Kopplung über ein speziell ausgeführtes Gestänge zwischen Antrieb und Spiegel. Durch die Rückholfeder kann dieser Antrieb in einer der beiden Positionen, vorzugsweise der Messposition, spannungsfrei betrieben werden.

Der piezoelektrische Antrieb ist ein translatorisch wirkender Antrieb.

Der Referenzkörper besteht nach der Weiterbildung des Patentanspruchs 8 vorteilhafterweise aus einem Material für einen Intensitätsstandard oder aus einer Materialkombination für sowohl einen Intensitätsstandard als auch einen Wellenlängenstandard.

Der Referenzkörper besteht nach der Weiterbildung des Patentanspruchs 9 günstigerweise für einen Intensitätsstandard aus gesintertem Polytetrafluorethylen geringer Dichte.

Der Referenzkörper weist nach der Weiterbildung des Patentanspruchs 10 für einen kombinierten Intensitäts- und Wellenlängenstandard einen mit seltenen Erden gefüllten Bestandteil auf, wobei die seltenen Erden zur Wellenlängenkalibrierung des Spektrometersystems geeignet sind.

Der Antrieb und die Quelle für optische Strahlung sind nach der Weiterbildung des Patentanspruchs 11 mit einer Steuereinrichtung im Gehäuse verbunden. Das ist dabei beispielsweise eine programmierbare Steuereinrichtung auch als Datenverarbeitungssystem. Weiterhin ist vorteilhafterweise ein Datenspeicher insbesondere mit Kalibrierdaten ein Bestandteil der Steuereinrichtung. Damit kann auch eine Analyse der Substanzen ohne Referenz erfolgen.

Außerhalb des Spektrometermesskopfes ist nach der Weiterbildung des Patentanspruchs 12 ein diffuser oder gerichteter Reflektor so angeordnet, dass sich zu analysierende Substanz zwischen dem Spektrometermesskopf und dem Reflektor befindet und dadurch transparente oder teiltransparente Substanzen in Transmission oder Transflexion analysierbar sind. Damit ist es möglich, diese Anordnung auch für Transmissionsmessungen zu verwenden, bei denen andernfalls die Aufnahme einer sehr probennahen Referenz nicht so einfach realisierbar wäre.

Nach der Weiterbildung des Patentanspruchs 13 ist eine abbildende Optik so angeordnet, dass eine im Abstand zum Spektrometermesskopf befindliche Substanz durch die Quelle für optische Strahlung mit optischer Strahlung beaufschlagt wird und von der Substanz reflektierte optische Strahlung in den Lichtleiter einkoppelt.

Die Quelle für optische Strahlung und der Lichtleiter sind nach der Weiterbildung des Patentanspruchs 14 vorteilhafterweise so angeordnet, dass deren Achsstrahlen parallel oder nahezu nahezu paralle verlaufen. Dadurch kann erreicht werden, dass die zu analysierenden Substanzen auch noch bei Abstand zum Fenster eine ausreichende optische Strahlung reflektieren. Darüber hinaus kann auch eine höhere Eindringtiefe der optischen Strahlung in die Substanz erzielt werden. Die Eindingtiefe hängt dabei von der Dichte der Substanz ab.

Die Quelle für optische Strahlung und der Lichtleiter sind nach der Weiterbildung des Patentanspruchs 15 vorteilhafterweise in einem solchen Winkel zum Fenster angeordnet, dass die direkten Reflexionen des Fensters nicht in den Lichtleiter einkoppeln. Durch Reflexionen am Fenster hervorgerufene Analysefehler werden vermieden.

Die Quelle für optische Strahlung ist nach der Weiterbildung des Patentanspruchs 16 mit einer Linse zur Bündelung der optischen Strahlung versehen. Durch eine nah an der Quelle für optische Strahlung angeordnete oder in eine derartige Quelle integrierte Sammellinse kann die Effizienz der Beleuchtung der Substanz vorteilhaft verbessert werden.

Ausführungsbeispiele der Erfindung sowie ein illustratives Beispiel, das nicht der Erfindung entspricht, sind in den Zeichnungen jeweils prinzipiell dargestellt und werden im Folgenden näher beschrieben. Es zeigen:
Fig. 1a und 1b einen Spektrometermesskopf mit einem translatorisch wirkenden Antrieb und einem stirnseitigen Austritt der optischen Strahlung,
Fig. 2a und 2b einen Spektrometermesskopf mit einem translatorisch wirkenden Antrieb und einem seitlichen Austritt der optischen Strahlung,
Fig. 3 einen nicht der Erfindung entsprechenden Spektrometennesskopf mit einem Biegeschwinger und einem stirnseitigen Austritt der optischen Strahlung und
Fig. 4 ein Spektrometersystem mit einem Spektrometermesskopf.

### 1. Ausführungsbeispiel:

Ein Spektrometermesskopf zur Analyse von Kenngrößen flüssiger, pastöser oder fester Substanzen für ein optisches Spektrometersystem besteht in einem ersten Ausführungsbeispiel im Wesentlichen aus einem drehbar gelagerten Spiegel 1, einer Quelle 2 für optische Strahlung, einem Referenzkörper 3, einen Antrieb 4 und wenigstens einem Endenbereich eines Lichtleiters 5 in einem Gehäuse 6 mit einem Fenster 7.

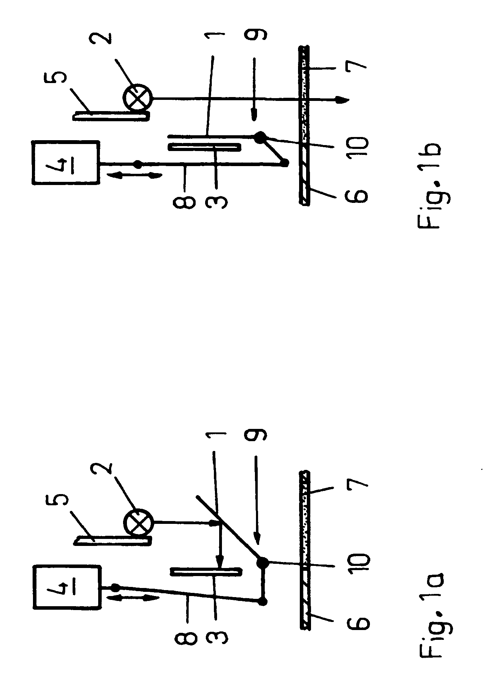

Die Fig. 1 zeigt einen Spektrometermesskopf mit einem translatorisch wirkenden Antrieb und einem stirnseitigen Austritt der optischen Strahlung in einer prinzipiellen Darstellung.

Das Fenster 7 befindet sich an der Stirnseite des als Hülse ausgebildeten Gehäuses 6.

Der drehbar gelagerte Spiegel 1 und die Quelle 2 für optische Strahlung sind so angeordnet, dass die optische Strahlung der Quelle 2 für optische Strahlung entweder auf den Referenzkörper 3 (Darstellung in der Fig. 1a) oder über das Fenster 7 auf die zu analysierende Substanz (Darstellung in der Fig. 1b) fällt.

Der drehbar gelagerte Spiegel 1 ist ein erster Arm einer Wippe 9. An den zweiten Arm der Wippe 9 ist der Antrieb 4 gekoppelt. Dieser ist als translatorisch wirkender Antrieb vorzugsweise als ein elektromagnetischer Antrieb mit einer Rückholfeder für das bewegte Teil ausgeführt. Der bewegte Teil dieses Antriebs ist über ein Gestänge 8 an die Wippe 9 gekoppelt.

Im Gehäuse 6 ist weiterhin der Lichtleiter 5 so angeordnet, dass wenigstens ein Teil der von der Oberfläche entweder des Referenzkörpers oder der zu analysierenden Substanz reflektierten optischen Strahlung in den Lichtleiter 5 eingekoppelt werden. Der Endenbereich des Lichtleiters 5 befindet sich dazu an oder beabstandet zu der Quelle 2 für optische Strahlung.

Das Drehgelenk 10 der Wippe 9 ist zwischen dem Fenster 7 und dem Referenzkörper 3 angeordnet. Dadurch ist sichergestellt, dass die optische Strahlung der Quelle 2 für optische Strahlung bei einer Endposition des Spiegels 1 auf den Referenzkörper 3 und die daraus resultierende optische Strahlung der Oberfläche des Referenzkörpers 3 wenigstens teilweise auf die Stirnseite des Lichtleiters 5 gelangt (Darstellung in der Fig. 1a).

Der Referenzkörper 3 besteht aus einem Material für einen Wellenlängenstandard, insbesondere seltenen Erden, und/oder aus einem Material für einen Intensitätsstandard, insbesondere gesintertem Polytetrafluorethylen geringer Dichte.

Bei der anderen Endposition des Spiegels 1 gelangt die optische Strahlung direkt von der Quelle 1 für optische Strahlung über das Fenster 7 auf die zu analysierende Substanz und die daraus resultierende optische Strahlung der zu analysierenden Substanz wenigstens teilweise zu der Stirnseite des Lichtleiters 5 (Darstellung in der Fig. 1b).

In einer Ausführungsform des ersten Ausführungsbeispiels kann das Fenster 7 auch ein Bestandteil einer Seitenwand des Gehäuses 6 sein. Dabei sind die Positionen des Referenzkörpers 3 und die des Fensters 7 gegenüber dem Ausführungsbeispiel vertauscht.

### 2. Ausführungsbeispiel:

Ein Spektrometermesskopf zur Analyse von Kenngrößen flüssiger, pastöser oder fester Substanzen für ein optisches Spektrometersystem besteht in einem zweiten Ausführungsbeispiel im Wesentlichen aus einem drehbar gelagerten Spiegel 1, einer Quelle 2 für optische Strahlung, einem Referenzkörper 3, einem Antrieb 4 und wenigstens einem Endenbereich eines Lichtleiters 5 in einem Gehäuse 6 mit einem Fenster 7 in einer Seitenwand.

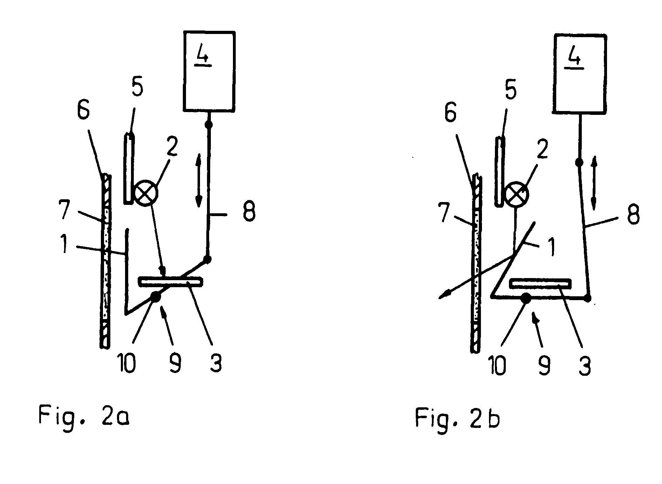

Die Fig. 2 zeigt einen Spektrometermesskopf mit einem translatorisch wirkenden Antrieb und einem seitlichen Austritt der optischen Strahlung in einer prinzipiellen Darstellung.

Das Drehgelenk 10 für den Spiegel 1, der Referenzkörper 3 und ein Halter für die Fixierung des Lichtleiters 5 sind beabstandet zueinander und sowohl zu der Quelle 2 für optische Strahlung und dem Endenbereich des Lichtleiters 5 angeordnet. Das Drehgelenk 10, der Referenzkörper 3 und der Halter können dabei über Befestigungselemente miteinander verbunden sein.

Der drehbar gelagerte Spiegel 1 und die Quelle 2 für optische Strahlung sind so angeordnet, dass die optische Strahlung entweder auf den Referenzkörper 3 (Darstellung in der Fig. 2a) oder über das Fenster 7 auf die zu analysierende Substanz (Darstellung in der Fig. 2b) fällt.

Der Spiegel 1 ist ein erster Arm einer Wippe 9. An den zweiten Arm der Wippe 9 ist der Antrieb 4 gekoppelt. Dieser ist als translatorisch wirkender Antrieb ausgeführt, insbesondere in Form eines elektromagnetischen Antriebs mit einer Rückholfeder für das bewegte Teil.

Im Gehäuse 6 ist weiterhin der Lichtleiter 5 so angeordnet, dass wenigstens ein Teil der von der Oberfläche entweder des Referenzkörpers 3 oder der zu analysierenden Substanz reflektierten optischen Strahlung in den Lichtleiter 5 eingekoppelt wird. Der Endenbereich des Lichtleiters 5 befindet sich dazu an oder beabstandet zu der Quelle 2 für optische Strahlung im Halter.

Das Drehgelenk 10 ist so angeordnet, dass die optische Strahlung der Quelle 2 für optische Strahlung bei einer Endposition des Spiegels 1 über das Fenster 7 auf die zu analysierende Substanz und die daraus resultierende optische Strahlung der Oberfläche der zu analysierenden Substanz wenigstens teilweise über das Fenster 7 den Spiegel 1 auf die Stirnseite des Lichtleiters 5 gelangt (Darstellung in der Fig. 2b). Dabei ist der Antrieb nicht angesteuert.

Bei der anderen Endposition des Spiegels 1 gelangt die optische Strahlung direkt von der Quelle 2 für optische Strahlung auf den Referenzkörper 3 und die daraus resultierende optische Strahlung des Referenzkörpers 3 wenigstens teilweise auf die Stirnseite des Lichtleiters 5 (Darstellung in der Fig. 2a). Der Referenzkörper besteht aus einem Material für einen Wellenlängenstandard, insbesondere seltenen Erden, und/oder aus einem Material für einen Intensitätsstandard, insbesondere gesintertem Polytetrafluorethylen geringer Dichte.

In Ausführungsformen der Ausführungsbeispiele können zwei Quellen 2 für optische Strahlung angeordnet sein. Die Quellen 2 für optische Strahlung sind dabei so angeordnet, dass die optische Strahlung wenigstens einer der Quellen 2 für optische Strahlung entweder auf den Referenzkörper 3 im Gehäuse 6 oder über das Fenster 7 des Gehäuses 6 auf die zu analysierende Substanz fällt. Der Lichtleiter 5 befindet sich dabei zwischen den Quellen 2 für optische Strahlung, so dass wenigstens ein Teil der von der Oberfläche entweder des Referenzkörpers 3 oder der zu analysierenden Substanz reflektierten oder transmittierten optischen Strahlung in den Lichtleiter 5 eingekoppelt wird.

In weiteren Ausführungsformen der Ausführungsbeispiele können sich die Wippe 9, das Drehgelenk 10 der Wippe 9, der Referenzkörper 3, die Quelle 1 für optische Strahlung und der Antrieb 4 auf einer Grundplatte als Grundkörper befinden, so dass eine Baugruppe realisiert ist.

Die Grundplatte ist dazu im ersten Ausführungsbeispiel am Fenster 7 oder im zweiten Ausführungsbeispiel am Boden im Gehäuse 6 angeordnet.

Die Grundplatte besitzt im ersten Fall einen Durchbruch zum Durchtritt der optischen Strahlung der Quelle 2 für optische Strahlung in Richtung des Fensters 7 und damit zur analysierenden Substanz. In einem Beispiel, das nicht der Erfindung entspricht, kann an Stelle des elektromagnetischen Antriebs ein Biegebalken als Biegeschwinger 11 angeordnet sein. Das ist beispielsweise ein piezoelektrischer Biegeschwinger, insbesondere ein Bimorphaktor oder Trimorphaktor, so dass ausreichend große Biegungen realisierbar sind. Der Biegebalken 11 ist dazu an den zweiten Arm der Wippe 9 gekoppelt.

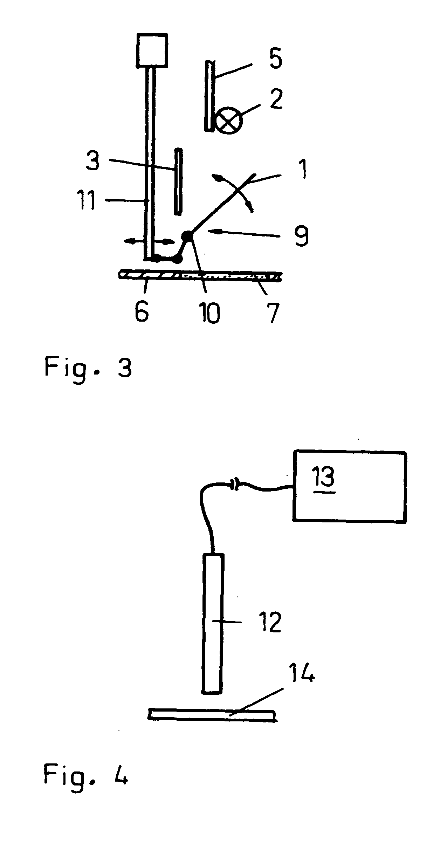

Die Fig. 3 zeigt einen Spektrometermesskopf mit einem Biegeschwinger und einem stirnseitigen Austritt der optischen Strahlung in einer prinzipiellen Darstellung.

Wenigstens ein Spektrometermesskopf 12 des ersten Ausführungsbeispiels oder wenigstens ein Spektrometermesskopf 12 des zweiten Ausführungsbeispiels ist mit einem Spektrometer 13 verbunden und bildet so ein optisches Spektrometersystem für einen Messkörper 14 aus einer zu analysierenden Substanz.

Die Fig. 4 zeigt ein optisches Spektrometersystem mit einem Spektrometermesskopf in einer prinzipiellen Darstellung.

Der Spektrometermesskopf bildet im Zusammenhang mit dem Spektrometer ein bekanntes optisches Spektrometersystem. Mit dem optischen Spektrometersystem können Absorptionsspektren erfasst werden. Das Spektrometer selbst ist ein bekanntes Prismenspektrometer, Gitterspektrometre oder FTIR-Spektrometer.

In einem Prismenspektrometer wird ein Prisma als dispersives Element eingesetzt. Dabei wird die einfallende optische Strahlung in seine einzelnen Wellenlängen zerlegt. Über die ermittelten spektralen Anteile können Rückschlüsse auf die Zusammensetzung der Substanz gezogen werden. Weiterhin kann das Prismenspektrometer auch zur Messung der Brechzahl, des Reflexions- oder des Transmissionsgrades einer Substanz benutzt werden, falls die Wellenlänge der verwendeten optischen Strahlung bekannt ist.

Wird das Prisma durch ein Beugungsgitter ersetzt, so ist ein Gitterspektrometer realisiert. Dabei wird die optische Beugung an einem Gitter zur Dispersion der optischen Strahlung genutzt. Diese gelangt zu wenigstens einem spaltförmigen Strahlungseintritt. Die Ausrichtung des Spalts entspricht der Ausrichtung der Furchen/Linien des Beugungsgitters. Die Beugung/Interferenz erzeugt das Spektrum, das mittels Halbleiterdetektoren erfasst wird.

Eine weitere Form ist das Fourier-Transformations-Infrarot-Spektrometer, wobei bei Verstellung des Interferometers über eine Fourier-Transformation optische Spektren berechnet werden.

## Patentansprüche

1. Spektrometermesskopf für ein optisches Spektrometersystem zur Analyse von Kenngrössen flüssiger, pastöser oder fester Substanzen, wobei in einem Gehäuse (6) ein drehbar gelagerter Spiegel (1) und wenigstens eine Quelle (2) für optische Strahlung oder eine optische Strahlung auskoppelnde Einrichtung so angeordnet sind, dass die optische Strahlung durch Klappen des drehbar gelagerten Spiegels (1) zwischen zwei Endpositionen entweder in einer Endposition auf einen Referenzkörper (3) im Gehäuse (6) oder in der anderen Endposition über ein Fenster (7) des Gehäuses (6) auf die Substanz fällt, dass der drehbar gelagerte Spiegel (1) zum Klappen zwischen den zwei Endpositionen mechanisch an einen translatorisch wirkenden Antrieb (4) im Gehäuse (6) gekoppelt ist, dass im Gehäuse (6) wenigstens ein Lichtleiter (5) so angeordnet ist, dass wenigstens ein Teil der von der Oberfläche entweder des Referenzkörpers (3) oder der Substanz reflektierten oder transmittierten optischen Strahlung in den Lichtleiter (5) einkoppelt, **dadurch gekennzeichnet, dass** der drehbar gelagerte Spiegel (1) der erste Arm einer Wippe (9) ist und dass an den zweiten Arm der Wippe (9) der Antrieb (4) gekoppelt ist.

2. Spektrometermesskopf nach Patentanspruch 1, **dadurch gekennzeichnet, dass** das Drehgelenk des drehbar gelagerten Spiegels (1) an den Antrieb (4) gekoppelt ist, dass im Gehäuse (6) ein Gleitstück oder Rollkörper für den drehbar gelagerten Spiegel (1) an dessen Rückseite und wenigstens ein an den drehbar gelagerten Spiegel (1) angreifendes Federelement so angeordnet sind, dass die Federkraft in Richtung des Gleitstücks oder Rollkörpers wirkt und dass das Drehgelenk beabstandet zum Gleitstück geradgeführt bewegbar ist, so dass der drehbar gelagerte Spiegel (1) bei einer Bewegung gegenüber der Führung geschwenkt wird.

3. Spektrometermesskopf nach Patentanspruch 1, **dadurch gekennzeichnet, dass** ein Grundkörper wenigstens entweder für das Drehgelenk (10) oder mit dem Drehgelenk (10) des drehbar gelagerten Spiegels (1) mit einem Heizelement für das Fenster (7) versehen ist.

4. Spektrometermesskopf nach Patentanspruch 1, **dadurch gekennzeichnet, dass** in dem Gehäuse (6) der drehbar gelagerte Spiegel (1) und zwei Quellen (2) für optische Strahlung so angeordnet sind, dass die optische Strahlung wenigstens einer der Quellen (2) für optische Strahlung jeweils entweder auf den Referenzkörper (3) im Gehäuse (6) oder über das Fenster (7) des Gehäuses (6) auf die Substanz fällt, und dass im Gehäuse (6) die Stirnseite des Lichtleiters (5) so angeordnet ist, dass wenigstens ein Teil der von der Oberfläche entweder des Referenzkörpers (3) oder der Substanz reflektierten oder transmittierten optischen Strahlung in den Lichtleiter (5) eingekoppelt wird.

5. Spektrometermesskopf nach Patentanspruch 1, **dadurch gekennzeichnet, dass** ein Grundkörper, die Wippe (9), das Drehgelenk (10) der Wippe (9), der Referenzkörper (3), der Antrieb (4) und entweder die Quelle (2) für optische Strahlung oder die optische Strahlung auskoppelnde Einrichtung Bestandteile einer Baugruppe sind.

6. Spektrometermesskopf nach Patentanspruch 1, **dadurch gekennzeichnet, dass** das Fenster (7) ein Bestandteil entweder der Stirnwand oder einer Seitenwand des Gehäuses (6) ist.

7. Spektrometermesskopf nach Patentanspruch 1, **dadurch gekennzeichnet, dass** der translatorisch wirkende Antrieb (4) ein elektromagnetischer Antrieb mit einer Rückholfeder für das bewegte Teil oder ein translatorisch wirkender piezoelektrischer Antrieb ist.

8. Spektrometermesskopf nach Patentanspruch 1, **dadurch gekennzeichnet, dass** der Referenzkörper (3) aus einem Material für einen Intensitätsstandard oder aus einer Materialkombination für sowohl einen Intensitätsstandard als auch einen Wellenlängenstandard besteht.

9. Spektrometermesskopf nach Patentanspruch 8, **dadurch gekennzeichnet, dass** der Referenzkörper (3) für einen Intensitätsstandard aus gesintertem Polytetrafluorethylen geringer Dichte besteht.

10. Spektrometermesskopf nach Patentanspruch 8, **dadurch gekennzeichnet, dass** der Referenzkörper (3) für einen kombinierten Intensitäts- und Wellenlängenstandard einen mit seltenen Erden gefüllten Bestandteil aufweist, wobei die seltenen Erden zur Wellenlängenkalibrierung des Spektrometersystems geeignet sind.

11. Spektrometermesskopf nach Patentanspruch 1, **dadurch gekennzeichnet, dass** der Antrieb (4) und die Quelle (2) für optische Strahlung mit einer Steuereinrichtung im Gehäuse (6) verbunden sind und dass ein Datenspeicher insbesondere mit Kalibrierdaten ein Bestandteil der Steuereinrichtung ist.

12. Spektrometermesskopf nach Patentanspruch 1, **dadurch gekennzeichnet, dass** ausserhalb des Spektrometermesskopfes (12) ein diffuser oder gerichteter Reflektor so angeordnet ist, dass sich die zu analysierende Substanz zwischen dem Spektrometermesskopf und dem Reflektor befindet und dadurch auch transparente oder teiltransparente Substanzen in Transmission oder Transflexion analysierbar sind.

13. Spektrometermesskopf nach Patentanspruch 1, **dadurch gekennzeichnet, dass** eine abbildende Optik so angeordnet ist, dass eine im Abstand zum Spektrometermesskopf befindliche Substanz durch die Quelle (2) für optische Strahlung mit optischer Strahlung beaufschlagt wird und von der Substanz reflektierte optische Strahlung in den Lichtleiter (5) einkoppelt.

14. Spektrometermesskopf nach Patentanspruch 1, **dadurch gekennzeichnet, dass** die Quelle (2) für optische Strahlung und der Lichtleiter (5) so angeordnet sind, dass die jeweiligen Achsstrahlen parallel oder nahezu parallel verlaufen.

15. Spektrometermesskopf nach Patentanspruch 1, **dadurch gekennzeichnet, dass** die Quelle (2) für optische Strahlung und der Lichtleiter (5) so zum Fenster (7) angeordnet sind, dass die direkten Reflexionen des Fensters (7) nicht von dem Lichtleiter (5) aufgenommen werden.

16. Spektrometermesskopf nach Patentanspruch 1, **dadurch gekennzeichnet, dass** die Quelle (2) für optische Strahlung mit einer Linse zur Bündelung der optischen Strahlung versehen ist.

## Claims

1. Spectrometer measuring head for an optical spectrometer system for analysing parameters of liquid, paste-like or solid substances, a rotatably mounted mirror (1) and at least one source (2) of optical radiation or a device which couples out optical radiation being arranged in a housing (6) such that, by flapping the rotatably mounted mirror (1) between two end positions, the optical radiation is incident upon either a reference body (3) in the housing (6) in one end position or the substance, via a window (7) of the housing (6), in the other end position, and such that the rotatably mounted mirror (1) is mechanically coupled to a translational drive (4) in the housing (6) in order to be flapped between the two end positions, and such that at least one light guide (5) is arranged in the housing (6) such that at least some of the optical radiation reflected or transmitted by the surface either of the reference body (3) or of the substance is coupled into the light guide (5), **characterised in that** the rotatably mounted mirror (1) is the first arm of a rocker (9) and **in that** the drive (4) is coupled to the second arm of the rocker (9).

2. Spectrometer measuring head according to claim 1, **characterised in that** the pivot joint of the rotatably mounted mirror (1) is coupled to the drive (4), and **in that** a slider or roller body for the rotatably mounted mirror (1) is arranged on the rear of said mirror in the housing (6) and at least one spring element which acts on the rotatably mounted mirror (1) is arranged such that the spring force acts in the direction of the slider or roller body, and such that the pivot joint can be moved in a straight line at a distance from the slider so that the rotatably mounted mirror (1) is pivoted relative to the guide during movement.

3. Spectrometer measuring head according to claim 1, **characterised in that** a base body is provided with a heating element for the window (7) at least either for the pivot joint (10) or together with the pivot joint (10) of the rotatably mounted mirror (1).

4. Spectrometer measuring head according to claim 1, **characterised in that** the rotatably mounted mirror (1) and two sources (2) of optical radiation are arranged in the housing (6) such that the optical radiation of at least one of the sources (2) of optical radiation is incident in each case either upon the reference body (3) in the housing (6) or upon the substance via the window (7) of the housing (6), and **in that** the end face of the light guide (5) is arranged in the housing (6) such that at least some of the optical radiation reflected or transmitted by the surface either of the reference body (3) or of the substance is coupled into the light guide (5).

5. Spectrometer measuring head according to claim 1, **characterised in that** a base body, the rocker (9), the pivot joint (10) of the rocker (9), the reference body (3), the drive (4) and either the source (2) of optical radiation or the device which couples out optical radiation are component parts of an assembly.

6. Spectrometer measuring head according to claim 1, **characterised in that** the window (7) is a component part either of the end wall or of a side wall of the housing (6).

7. Spectrometer measuring head according to claim 1, **characterised in that** the translational drive (4) is an electromagnetic drive having a return spring for the moved part, or is a translational piezoelectric drive.

8. Spectrometer measuring head according to claim 1, **characterised in that** the reference body (3) consists of a material for an intensity standard or of a material combination for both an intensity standard and a wavelength standard.

9. Spectrometer measuring head according to claim 8, **characterised in that** the reference body (3) for an intensity standard consists of sintered low-density polytetrafluoroethylene.

10. Spectrometer measuring head according to claim 8, **characterised in that** the reference body (3) for a combined intensity and wavelength standard has a component part filled with rare earths, the rare earths being suitable for wavelength calibration of the spectrometer system.

11. Spectrometer measuring head according to claim 1, **characterised in that** the drive (4) and the source (2) of optical radiation are connected to a control device in the housing (6), and **in that** a data store, in particular containing calibration data, is a component part of the control device.

12. Spectrometer measuring head according to claim 1, **characterised in that** a diffuse or directed reflector is arranged outside the spectrometer measuring head (12) such that the substance to be analysed is located between the spectrometer measuring head and the reflector and, as a result, transparent or partially transparent substances can also be analysed in transmission or transflection.

13. Spectrometer measuring head according to claim 1, **characterised in that** an imaging optical system is arranged such that a substance which is located at a distance from the spectrometer measuring head is exposed to optical radiation by the source (2) of optical radiation and optical radiation reflected by the substance is coupled into the light guide (5).

14. Spectrometer measuring head according to claim 1, **characterised in that** the source (2) of optical radiation and the light guide (5) are arranged such that the respective axial rays extend in parallel or virtually in parallel.

15. Spectrometer measuring head according to claim 1, **characterised in that** the source (2) of optical radiation and the light guide (5) are arranged relative to the window (7) such that the direct reflections of the window (7) are not absorbed by the light guide (5).

16. Spectrometer measuring head according to claim 1, **characterised in that** the source (2) of optical radiation is provided with a lens for bundling the optical radiation.

## Revendications

1. Tête de mesure de spectromètre pour un système de spectromètre optique destiné à l'analyse de grandeurs caractéristiques de substances liquides, pâteuses ou solides, dans laquelle, dans un boîtier (6), il est disposé un miroir (1) supporté en rotation et au moins une source (2) de rayonnement optique ou un dispositif de découplage de rayonnement optique de telle sorte que le rayonnement optique, par le basculement du miroir (1) supporté en rotation entre deux positions extrêmes, tombe soit sur un corps de référence (3) dans le boîtier (6) dans une position extrême, soit sur la substance dans l'autre position extrême via une fenêtre (7) du boîtier (6), et de telle sorte que le miroir (1) supporté en rotation est, pour le basculement entre les deux positions extrêmes, couplé mécaniquement à un entraînement (4) agissant en translation dans le boîtier (6), et de telle sorte que, dans le boîtier (6), il est disposé au moins un guide de lumière (5) de telle sorte qu'au moins une partie du rayonnement optique réfléchi ou transmis à partir de la surface soit du corps de référence (3), soit de la substance est couplée dans le guide de lumière (5), **caractérisée en ce que** le miroir (1) supporté en rotation est le premier bras d'une bascule (9) et **en ce que** l'entraînement (4) est accouplé au deuxième arbre de la bascule (9).

2. Tête de mesure de spectromètre selon la revendication 1, **caractérisée en ce que** l'articulation rotative du miroir (1) supporté en rotation est accouplée à l'entraînement (4), **en ce que**, dans le boîtier (6), une coulisse ou un corps roulant pour le miroir (1) supporté en rotation, sur le côté arrière de celui-ci, et au moins un élément de ressort agissant sur le miroir (1) supporté en rotation sont disposés de telle sorte que la force de ressort agit en direction de la coulisse ou du corps roulant et de telle sorte que l'articulation rotative est mobile en étant guidée en ligne droite à distance de la coulisse de telle sorte que le miroir (1) supporté en rotation est amené à pivoter lors d'un mouvement par rapport au guidage.

3. Tête de mesure de spectromètre selon la revendication 1, **caractérisée en ce qu'**un corps de base au moins soit pour l'articulation rotative (10), soit avec l'articulation rotative (10) du miroir (1) supporté en rotation est muni d'un élément chauffant pour la fenêtre (7).

4. Tête de mesure de spectromètre selon la revendication 1, **caractérisée en ce que**, dans le boîtier (6), le miroir (1) supporté en rotation et deux sources (2) de rayonnement optique sont disposés de telle sorte que le rayonnement optique d'au moins une des sources (2) de rayonnement optique tombe respectivement soit sur le corps de référence (3) dans le boîtier (6), soit via la fenêtre (7) du boîtier (6) sur la substance, et **en ce que**, dans le boîtier (6), le côté frontal du guide de lumière (5) est disposé de telle sorte qu'au moins une partie du rayonnement optique réfléchi ou transmis à partir de la surface soit du corps de référence (3), soit de la substance est couplée dans le guide de lumière (5).

5. Tête de mesure de spectromètre selon la revendication 1, **caractérisée en ce qu'**un corps de base, la bascule (9), l'articulation rotative (10) de la bascule (9), le corps de référence (3), l'entraînement (4) et soit la source (2) de rayonnement optique, soit le dispositif découplant le rayonnement optique sont des composants d'un ensemble.

6. Tête de mesure de spectromètre selon la revendication 1, **caractérisée en ce que** la fenêtre (7) est un composant soit de la paroi frontale, soit d'une paroi latérale du boîtier (6).

7. Tête de mesure de spectromètre selon la revendication 1, **caractérisée en ce que** l'entraînement (4) agissant en translation est un entraînement électromagnétique avec un ressort de rappel pour la partie déplacée ou un entraînement piézoélectrique agissant en translation.

8. Tête de mesure de spectromètre selon la revendication 1, **caractérisée en ce que** le corps de référence (3) se compose d'un matériau pour un étalon d'intensité ou d'une combinaison de matériaux aussi bien pour un étalon d'intensité que pour un étalon de longueur d'onde.

9. Tête de mesure de spectromètre selon la revendication 8, **caractérisée en ce que** le corps de référence (3) pour un étalon d'intensité se compose de polytétrafluoroéthylène fritté de faible densité.

10. Tête de mesure de spectromètre selon la revendication 8, **caractérisée en ce que** le corps de référence (3) pour un étalon d'intensité et de longueur d'onde combiné présente un composant rempli de terres rares, dans laquelle les terres rares sont appropriées pour l'étalonnage de la longueur d'onde du système de spectromètre.

11. Tête de mesure de spectromètre selon la revendication 1, **caractérisée en ce que** l'entraînement (4) et la source (2) de rayonnement optique sont raccordés à un dispositif de commande dans le boîtier (6), et **en ce qu'**une mémoire de données, en particulier avec des données d'étalonnage, est un composant du dispositif de commande.

12. Tête de mesure de spectromètre selon la revendication 1, **caractérisée en ce que**, à l'extérieur de la tête de mesure de spectromètre (12), un réflecteur diffus ou dirigé est disposé de telle sorte que la substance à analyser se trouve entre la tête de mesure de spectromètre et le réflecteur, et que de ce fait également des substances transparentes ou partiellement transparentes peuvent être analysées en transmission ou en transflexion.

13. Tête de mesure de spectromètre selon la revendication 1, **caractérisée en ce qu'**une optique d'imagerie est disposée de telle sorte qu'une substance située à distance de la tête de mesure de spectromètre est exposée à un rayonnement optique par la source (2) de rayonnement optique, et qu'un rayonnement optique réfléchi par la substance est couplé dans le guide de lumière (5).

14. Tête de mesure de spectromètre selon la revendication 1, **caractérisée en ce que** la source (2) de rayonnement optique et le guide de lumière (5) sont disposés de telle sorte que les jets axiaux respectifs sont parallèles ou quasiment parallèles.

15. Tête de mesure de spectromètre selon la revendication 1, **caractérisée en ce que** la source (2) de rayonnement optique et le guide de lumière (5) sont disposés de telle sorte par rapport à la fenêtre (7) que les réflexions directes de la fenêtre (7) ne sont pas recueillies par le guide de lumière (5).

16. Tête de mesure de spectromètre selon la revendication 1, **caractérisée en ce que** la source (2) de rayonnement optique est munie d'une lentille pour la mise en faisceau du rayonnement optique.
